(19) Europäisches Patentamt

European Patent Office

Office européen des brevets

(11) **EP 0 622 173 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.⁷: **B29D 7/01**, C08J 5/18, C08K 7/18, H01G 4/20 // B29K67/00, B29K105/16

(21) Anmeldenummer: **94105959.4**

(22) Anmeldetag: **18.04.1994**

(54) **Polyesterrohstoff und daraus hergestellte Folie**

Polyester raw material and film produced from it

Polyester et film obtenue à partir de ce polyester

(84) Benannte Vertragsstaaten:
**DE FR LU**

(30) Priorität: **24.04.1993 DE 4313510**

(43) Veröffentlichungstag der Anmeldung:
**02.11.1994 Patentblatt 1994/44**

(73) Patentinhaber: **Mitsubishi Polyester Film GmbH 65023 Wiesbaden (DE)**

(72) Erfinder:
• **Kurz, Rainer**
  **D-65232 Taunusstein (DE)**
• **Ferdinand, Andreas**
  **D-65207 Wiesbaden (DE)**
• **Dallmann, Herrmann**
  **D-65207 Wiesbaden (DE)**

(74) Vertreter: **Zounek, Nikolai, Dipl.-Ing. et al Patentanwaltskanzlei Zounek, Industriepark Kalle Albert, Gebäude H391 Rheingaustrasse 190-196 65174 Wiesbaden (DE)**

(56) Entgegenhaltungen:
**EP-A- 0 261 430       EP-A- 0 423 402**

• **CHEMICAL ABSTRACTS, vol. 110, no. 14, 3. April 1989, Columbus, Ohio, US; abstract no. 116310, & JP-A-63 238 136 (TEIJIN) 4. Oktober 1988**
• **CHEMICAL ABSTRACTS, vol. 110, no. 16, 17. April 1989, Columbus, Ohio, US; abstract no. 136618, & JP-A-63 235 336 (TEIJIN) 30. September 1988**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft einen Polyesterrohstoff, insbesondere einen Polyethylenterephthalatrohstoff (PET-Rohstoff), der feinteilige, verteilte, anorganische und/oder organische Partikel enthält sowie daraus hergestellte Folien, die verbesserte Wickeleigenschaften aufweisen und sich deshalb besser als Kondensatorfolien eignen als herkömmliche Folien.

Insbesondere für die Anwendung in Kondensatoren werden immer dünnere und glattere Folien als Dielektrika gefordert, um die Baugröße der Kondensatoren zu reduzieren beziehungsweise die Kapazitätsausbeute zu erhöhen. Die Verarbeitung von immer dünneren, konventionell gestreckten Folien verursacht jedoch zunehmend das Problem, daß irreversible Foliendefekte, wie das Entstehen von Falten und Verdehnungen, bei den verschiedenen Verarbeitungsschritten, wie Wickeln, Metallisieren, Schneiden und Kondensatorwickeln, auftreten. Damit die Folie ohne Falten und Verdehnungen verarbeitet werden kann, benötigt sie zum einen einen ausreichenden Schlupf, der ein Verblocken der Folie bei den einzelnen Verarbeitungsschritten verhindert. Zum anderen sollte die Folie neben einem guten Schlupf eine Oberflächentopographie aufzeigen, die es ermöglicht, daß die Luft zwischen den einzelnen Folienlagen des Wickels hinreichend schnell entweichen kann. Technische Lösungsansätze, wie zunehmende Wickelspannungen, sind bei Ultradünnstfolien nur begrenzt anwendbar, da eine Zunahme der Wickelspannung zu irreversiblen Foliendefekten, wie Verdehnungen, führen kann.

Es ist bekannt (US-A-3,980,611 Du Pont), daß durch Kombination von kleinen, mittleren und großen Partikeln in Abhängigkeit von der Foliendicke das Folienhandling verbessert werden kann. In der US-A-3,980,611 wird dies durch eine Kombination von großen (2,5 - 10 $\mu$m) mit mittleren (1 - 2,5 $\mu$m) und kleinen (< 1 $\mu$m) Partikeln bewirkt, wobei der folgende Zusammenhang erfüllt sein muß:

$$C_1 = K_{groß}/T^{0.6}$$
$$C_2 = K_{mittel} / T^{0.6}$$
$$C_3 = K_{klein} / T^{0.6}$$

| | |
|---|---|
| $K =$ | $K_{groß} + k_{mittel} + K_{klein} \leq 2510$ |
| $K_{mittel}/K \approx$ | 0.3 |
| $T =$ | Foliendicke (hier im Bereich von 0,1 - 3 $\mu$m) |
| $K_{groß, mittel, klein} =$ | empirische Konstanten |
| | $K_{groß}$ 97 - 500 |
| | $K_{mittel}$ <200 |
| | $K_{klein}$ 194-2000 |
| $C_{1,2,3} =$ | Konzentration |

Nachteilig an diesen ultradünnen Folien ist der relativ hohe Anteil an großen Partikeln mit einer Korngröße von 2,5 bis 10 $\mu$m. Bei einer Foliendicke von 3 $\mu$m bis 1 $\mu$m und darunter, können diese großen Partikel zu Sollbruchstellen während des Herstellungsprozesses werden. Außerdem stellen sie Schwachpunkte bezüglich der Isolation dar. Weiter wird ein Nachteil darin gesehen, daß die relativ große Rauhigkeit beziehungsweise die hohen Oberflächenerhebungen, die durch die großen Partikel verursacht werden, eine geringere Kapazitätsausbeute pro Volumen im Kondensator verursacht.

Es ist bekannt (EP-A-0 423 402 Teijin), daß Folien im Dickenbereich zwischen 0,1 und 4 $\mu$m durch den Zusatz von inerten, sekundär agglomerierten, anorganischen Partikeln mit einem Teilchendurchmesser von 0,05 bis 5 $\mu$m und einem primären, sphärischen Partikel (d.h. einem solchen mit einem Aspect Ratio von 1,0 bis 1,2, mit einem Teilchendurchmesser von 0,05 bis 4 $\mu$m hergestellt werden können. Sekundär agglomerierte Teilchen sind - im Gegensatz zu primären 1,0 bis 1,2, mit einem Teilchendurchmesser von 0,05 bis 4$\mu$m hergestellt werden können. Sekundär agglomerierte Teilchen sind - im Gegensatz zu primären Teilchen - solche, die sich im Polymeren zu mehreren zusammenlagern und quasi die Wirkung eines größeren Teilchens hervorrufen. Die Angabe des mittleren Teilchendurchmessers bezieht sich bei sekundär agglomerierten Teilchen auf die Größe der Agglomerate und nicht auf die größe der primären Teilchen. Unter inert versteht man, daß die Teilchen unter Prozeß- und Verarbeitungsbedingungen nicht mit dem Polymerrohstoff reagieren. Sphärisch bedeutet, daß die Teilchen der idealisierten Kugelgestalt sehr nahe kommen. Ein Maß hierfür ist das Aspect Ratio. Aspect Ratio ist der Quotient aus dem größen und dem kleinsten Durchmesser, welcher im Idealfall (Kugelgestalt) = 1 ist.

Sowohl bei der Kombination der inerten, sekundär agglomerierten Partikel mit größeren inerten, anorganischen beziehungsweise organischen Partikeln oder sphärischen Partikeln werden im Vergleich zur angestrebten Foliendicke von $\leq 2$ $\mu$m, relativ große Partikel eingesetzt. Durch die Zugabe der doch sehr großen Partikel wird zwar das Wickeln der Folien erleichtert beziehungsweise erst ermöglicht, jedoch können auch bei diesen Kombinationen die großen Partikel Sollbruchstellen bei der Folienherstellung, wie auch Schwachpunkte bezüglich elektrischer Isolation, darstellen.

Der Einsatz von sphärischen Partikeln bei der Rohstoff- und Folienherstellung ist ebenfalls beschrieben in EP-A-0 236 948 (Nippon Shokubai), EP-A-0 262 430 (Teijin) und EP-A-0 257 611 (Diafoil). Allerdings wird in diesen Anmeldungen kein Hinweis gegeben, wie die Topographie einer ultradünnen Folie gestaltet werden muß, damit sie ohne die angeführten Probleme (Falten, Verdehnungen) verarbeitet werden kann.

Eigene Versuche haben ergeben, daß durch die Reduzierung der Foliendicke bei gleicher Rohstoffrezeptur, d.h. bei gleicher chemischer Zusammensetzung, das Wickeln von Folien schwieriger wird. Dies liegt daran, daß die Luft, die zwischen den Folienlagen eingewickelt wird und aus dem Wickel in kürzest möglicher Zeit entweichen muß, mit abnehmender Foliendicke immer leichter irreversible Verdehnungen (Blasenbildung durch eingeschlossene Luft) verursacht. Ein Maß für die Neigung einer Folie zu solchen Wickelfehlern ist der Oberflächengasströmungswiderstand. Hierunter versteht man die Zeit, die Luft benötigt, um zwischen einer Folie und einer Glasplatte einen Druckunterschied auszugleichen. Über diese Meßgröße kann ermittelt werden, wie schnell die zwischen den einzelnen Folienlagen eingewickelte Luft aus dem Wickel entweichen kann. Eigene Untersuchungen zeigen, daß bei konstanter chemischer Zusammensetzung der Folie der Oberflächengasströmungswiderstand in erster Linie abhängt von der Foliendicke und der Folienrauhigkeit. Am Beispiel eines Polyethylenterephthalat(PET)-Rohstoffs, der 1000 ppm eines inerten, sekundär agglomerierten, anorganischen Partikels mit einem Teilchendurchmesser von 0,005 bis 4 µm und 1000 ppm eines weiteren inerten, anorganischen Partikels mit einem Teilchendurchmesser von 0,05 bis 5 µm enthält, ist dies für Foliendicken zwischen 1,8 und 10 µm in Tabelle 1 dargestellt.

Tabelle 1

| Foliendicke | Gasströmungszeit | | Rauhigkeit | | Wicklung |
|---|---|---|---|---|---|
| (µm) | gemessen (sec) | berechnet[1] (sec) | $R_a$ (nm) | $R_z$ (nm) | [2] |
| 10 | 70 ± 20 | 64 | - | - | + |
| 9 | - | 81 | - | - | + |
| 8 | - | 104 | - | - | + |
| 7 | 130 ± 50 | 140 | - | - | + |
| 6 | 180 ± 50 | 196 | 51 ± 8 | 569 ± 130 | + |
| 5 | 260 ± 50 | 292 | 46 ± 8 | 515 ±130 | + |
| 4 | - | 475 | - | - | + |
| 3 | 1.180 ± 150 | 889 | 45 ± 8 | 484 ± 130 | + |
| 2,5 | 1.420 ± 150 | 1.324 | 39 ± 8 | 441 ± 130 | + |
| 2 | 2.220 ± 200 | 2.156 | 36 ± 8 | 403 ± 130 | - |
| 1,8 | 2.250 ± 200 | 2.713 | 34 ± 8 | 384 ± 130 | - |

(1) Gasströmungszeit $t = a \cdot d^b$ [sec]
mit a = 9792 [sec/µm]
b = -2,18335
d = Foliendicke [µm]
Die Parameter (a) und (b) wurden empirisch ermittelt.

(2) Wicklung (+) = Folien konnten ohne Falten und Verdehnungen gewickelt werden
(-) = beim Wickeln traten Falten und Verdehnungen auf

Aus Tabelle 1 ist ersichtlich, daß mit abnehmender Foliendicke die Oberflächengasströmungszeiten zunehmen, daß also die Gefahr von Lufteinschlüssen und damit von irreversiblen Verdehnungen wächst.

Die Abhängigkeit der Oberflächengasströmungszeit von der Dicke ultradünner Kondensatorfolien ist exemplarisch für einige Folien in Dicken von 1,2 bis 3 µm in Tabelle 2 dargestellt (für diese ergaben sich andere empirische Konstanten als für die dickeren Folien gemäß Tabelle 1).

Tabelle 2

| Foliendicke | Gasströmungszeit | | Rauhigkeit | | Wicklung |
|---|---|---|---|---|---|
| (µm) | gemessen (sec) | berechnet[1](sec) | $R_a$ (nm) | $R_z$ (nm) | (2) |
| 3 | 900 ± 150 | 898 | 43 ± 8 | 468 ± 130 | + |
| 2,5 | 1.050 ± 150 | 1.081 | 42 ± 8 | 436 ± 130 | + |
| 2 | 1.250 ± 100 | 1.355 | 36 ± 8 | 383 ± 130 | + |
| 1,5 | 2.000 ± 200 | 1.815 | 35 ± 8 | 378 ±130 | + |
| 1,2 | 2.300 ± 200 | 2.276 | 34 ± 8 | 310 ±130 | + |

(1) Gasströmungszeit $t = a \cdot d^b$ [sec]

     a = 2.739 [sec/µm] b = -1,01479 d = Foliendicke [µm]

(2) Wicklung (+) = Folien konnten ohne Falten und Verdehnungen gewickelt werden (-) = beim Wickeln traten Falten und Verdehnungen auf

In Kenntnis des obengenannten Zusammenhanges ist es nicht überraschend, daß z.Zt. auf dem Markt erhältliche ultradünne Kondensatorfolien wie Lumirror® C60, Mylar® C oder Hostaphan® bei gleichen Dicken auch vergleichbare Oberflächengasströmungszeiten aufweisen (s. Tabelle 3a).

Tabelle 3a

| Folientyp | Foliendicke | Gasströmungszeit | Rauhigkeit | |
|---|---|---|---|---|
| | (µm) | gemessen (sec) | $R_a$ (nm) | $R_z$ (nm) |
| Lumirror® C60 | 2,0 | 1.200 ± 150 | 41 ± 8 | 390 ± 130 |
| Mylar® C | 2,0 | 900 ± 150 | 30 ± 8 | 370 ± 130 |
| Hostaphan® | 2,0 | 1.250 ± 150 | 36 ± 8 | 380 ± 130 |

Im Vergleich zu den doch sehr ähnlichen Rauhigkeitswerten und Peakhöhenverteilungswerten der Hostaphan und der Lumirrorfolie (s. Tabelle 3b), die auch sehr ähnliche Gasströmungszeiten aufweisen, liegt der Rauhigkeitswert für die Mylarfolie niedriger.

Tabelle 3b

| Folientyp | Gesamtpeakzahl | Oberflächenerhebungen bestimmter Peakhöhen | | |
|---|---|---|---|---|
| | $0,36mm^2$ | $0,05\text{-}0,3\ \mu m/0,36mm^2$ | $0,3\text{-}0,6\mu m/0,36mm^2$ | $0,6\text{-}1\mu m/0,36mm^2$ |
| Lumirror® C60 | 15.201 ± 2000 | 14.636 ± 1.970 | 513 ± 70 | 52 ± 20 |
| Mylar® C | 7.453 ± 2000 | 6.903 ± 1.970 | 448 ± 70 | 102 ± 20 |
| Hostaphan® | 11.932 ± 2000 | 11.681 ± 1.970 | 204 ± 70 | 47 ± 20 |

Trotzdem wird auch für die Mylarfolie ein zu Hostaphan und Lumirror vergleichbarer Gasströmungswert gefunden. Dieser Wert wird jedoch durch einen im Vergleich zu Hostaphan und Lumirror höheren Anteil an hohen Folienerhebungen (0,6-1,0 µm), die durch ein entsprechend großes Partikel erzeugt werden, erreicht (siehe hierzu US-A-3,980,611 Du Pont). Große Partikel haben jedoch die oben bereits erwähnten Nachteile (Sollbruchstellen, elektrische Fehlstellen).

Aufgabe der vorliegenden Erfindung war es nun, die Foliendicke so gering wie möglich zu halten (ultradünne Folien) und dabei das Auftreten von Wickelfehlern (irreversible Verdehnungen) weitestgehend zu unterbinden. Eine solche Folie sollte einen ausreichenden Schlupf über alle Verfahrensschritte aufweisen. Die Aufgabe wird gelöst durch eine Folie mit einer Dicke von 0,1 bis 4 µm, bevorzugt 2 µm und kleiner und einer Rauhigkeit $R_a$ von <30 nm, wobei die Peakhöhenverteilung der die Rauhigkeit verursachenden Oberflächenerhöhungen pro 0,36 $mm^2$ keine, beziehungsweise nur eine minimale Anzahl (<100) an Peakhöhen von 0,6 bis 1 µm und größer aufweist und wobei die Folie einen Oberflächengasströmungswiderstand von $t \leq a \cdot d^b$ mit a = 0 bis 10.000, bevorzugt 1 bis 3.000, insbesondere um 2.700, b = -3,0 bis 0, bevorzugt -1,5 bis -0,5, insbesondere um -1 und d ≤ 4 µm aufweist.

**EP 0 622 173 B1**

Folien mit einer Dicke von 2 µm und einer gemittelten Rauhigkeit von 30 nm sind zwar bekannt (s. Tabellen 3a und 3b), jedoch weisen diese Folien einige hohe, im Bereich von 0,6 bis 1 µm liegende Spitzen in den Oberflächenerhöhungen auf, die nachteilig sind. Diese Spitzen werden durch Partikel verursacht, deren Teilchendurchmesser z. T. deutlich größer als die Dicke der Folie ist. Wie oben bereits dargelegt, sind solche großen Partikel bei Folien mit einer Dicke von ≤2 µm nachteilig, weil es zu Abrissen in der Folienproduktion kommt. Auch auf die elektrische Fehlstellenhäufigkeit können sich sehr große Partikel nachteilig, d.h. mit einer erhöhten Anzahl an elektrischen Durchschlägen, auswirken. Die relativ hohe Zahl an großen Folienerhebungen ist sicherlich der Grund dafür, daß die Folien mit einer gemittelten Rauhigkeit von 30 nm einen zufriedenstellenden Oberflächengasströmungswiderstand aufweisen und entsprechend ohne Probleme (Falten und Verdehnungen) hergestellt und weiterverarbeitet werden können, jedoch wird dies erkauft auf Kosten einer geringeren Kapazitätsausbeute im Kondensator (größerer Lagenabstand im Wickel).

Die erfindungsgemäßen ultradünnen Folien mit Rauhigkeiten unter 30 nm und einem Oberflächengasströmungswiderstand t≤a•d$^b$, mit den obengenannten Werten für a, b und d können hergestellt werden aus einem Folienrohstoff, der neben dem thermoplastischen Polymer im wesentlichen nur primäre, sphärische und bevorzugt monodisperse Partikel (I) und anorganische beziehungsweise organische Partikel (II) enthält, wobei der Teilchendurchmesser der sphärischen und bevorzugt monodispersen Partikel (I) kleiner als der mittlere Teilchendurchmesser der anorganischen beziehungsweise organischen Partikel (II) ist.

Folien aus einem solchen Rohstoff lassen sich ohne Falten und Verdehnungen verarbeiten.

Die Partikel (I) sind sphärisch, d.h. sie besitzen ein Aspect Ratio von 1 bis 1,2. "Aspect Ratio" ist der Quotient aus dem größten und dem kleinsten Partikeldurchmesser. Dieses ist im Idealfall gleich 1. Die Aspect-Ratio-Werte werden an Teilchen in einer fertigen Folie gemessen und beziehen sich dementsprechend nicht auf die Aspect-Ratio-Werte der freien Partikel. Die Partikel (I) besitzen bevorzugt einen Teilchendurchmesser von 0,05 bis 2,5 µm, insbesondere von 0,05 bis 1 µm. "Monodispers" bedeutet hierbei, daß die Partikel eine sehr enge Korngrößenverteilung aufweisen; im Idealfall gar keine Verteilung aufweisen. In diesem Fall existiert keine mittlere Korngröße mehr, da quasi alle Teilchen den gleichen Durchmesser aufweisen. Die erfindungsgemäß bevorzugt eingesetzten monodispersen Partikel (I) weichen von der mittleren Teilchengröße um maximal 0,5 µm, vorzugsweise um maximal 0,1 µm, ab. Unter diesen Voraussetzungen beträgt die Standardabweichung über die mittlere Verteilung der Partikel < 0,5 µm, insbesondere < 0,1 µm. Bevorzugt handelt es sich um Siliziumdioxidpartikel, Silikonpartikel, Kalziumcarbonatpartikel, vernetzte Polystyrolpartikel, vernetzte Epoxidharzpartikel oder vernetzte Acrylatpartikel. Im folgenden werden diese Partikel (I) als "kleine Partikel" bezeichnet. Der Teilchendurchmesser dieser kleinen Partikel wie auch das Aspect Ratio und die Monodispersität können durch Ausmessen von elektronenmikroskopischen Aufnahmen bei einer Vergrößerung von 3000 bis 10000 bestimmt werden.

Die organischen beziehungsweise anorganischen Partikel (II) können sowohl sphärisch (Aspect Ratio 1 bis 1,2) als auch nicht sphärisch (Aspect Ratio > 1,2) sein und besitzen einen mittleren Teilchendurchmesser, der größer ist als der der kleinen Partikel, insbesondere von 0,05 bis 2,5 µm, bevorzugt von 0,5 bis 2,5 µm. Bevorzugt ist das Aspect Ratio dieser Teilchen >1,2, insbesondere 1,2 bis 5. Das Ausmaß der Korngrößenverteilung der Partikel (II) ist nicht kritisch, jedoch sind Partikel mit Verteilung, d.h. nicht-monodisperse Partikel, bevorzugt. Der mittlere Teilchendurchmesser der anorganischen beziehungsweise organischen Partikel (II) kann über einen Laserlichtbeugungs-Partikel-Analysator (z.B. Horiba LA 500) bestimmt werden. Aus der kumulativen Kurve der Korngrößenverteilung wird der mittlere Teilchendurchmesser als der Wert bestimmt, für den verteilung wird der mittlere Teilchendurchmesser als der Wert bestimmt, für den 50 Gew.-% der Teilchen größer beziehungsweise kleiner sind.

Die Partikel (II) können sowohl anorganische Partikel - beispielsweise aus Kaolin, Aluminiumoxid, Siliciumdioxid, amorpher Kieselsäure, pyrogener Kieselsäure, natürlichem und gefälltem Kalziumcarbonat - als auch organische Partikel - beispielsweise aus Silikonen, Acrylaten oder Epoxidharzverbindungen - sein. Im folgenden werden diese Partikel (II) als "mittlere Partikel" bezeichnet. Sowohl die Partikel (I) als auch die Partikel (II) sind käuflich erhältlich.

"Große" Partikel mit einem mittleren Teilchendurchmesser von <2,5 µm sind in den erfindungsgemäßen Folien und dem Folienrohstoff nicht enthalten.

Der Einsatz der mittleren und kleinen Partikel (I) und (II) ermöglicht eine Reduzierung der Folienrauhigkeit und gewährleistet trotzdem, daß die Folien ohne Falten und Verdehnungen verarbeitet werden können. Das heißt anders ausgedrückt, daß Folien mit einem Oberflächenströmungswiderstand t von kleiner a•d$^b$ (mit a,b wie oben angegeben) ohne die oben angeführten Probleme verarbeitet werden können.

Der Rohstoff enthält erfindungsgemäß 0,005 bis 5,0 Gew.-% Teilchen der Sorte (I) und (II) (diese Angabe entspricht der Summe der Teilchen I und II und bezieht sich auf das kumulative Gewicht von Polymer und Teilchen). Bevorzugt werden 0,01 bis 1,0 Gew.-% der sphärischen, bevorzugt monodispersen Partikel (I) und 0,01 bis 1,0 Gew.-% der anorganischen beziehungsweise organischen Partikel (II) eingesetzt.

Unter Polyesterrohstoffen werden Zusammensetzungen verstanden, die zum überwiegenden Teil, d.h. zu mindestens 80 Gew.-%, bevorzugt mindestens 90 Gew.-%, aus einem Polymer, ausgewählt aus der Gruppe Polyethylenterephthalat (PET), Polyethylennaphthalat(PEN), Poly-1,4-dicyclohexandimethylenterephthalat (PCT), Polyethylennaphthalatbibenzoat (PENBB) und Blends dieser Polymere bestehen. Bevorzugt sind Polyesterrohstoffe, die vorzugsweise im wesentlichen aus Ethylenterephthalateinheiten und/oder vorzugsweise bis zu 30 Mol-% aus Comonomereinheiten aufgebaut sind, wobei eine Variation in der Glykol- und/oder der Säurekomponente der Comonomereinheiten möglich ist. Die Herstellung der Polyester kann sowohl nach dem Umesterungsverfahreri mit den üblichen Katalysatoren, wie z.B. Zn-,. Ca-, Li- und Mn-Salzen, oder nach dem Direktveresterungsverfahren erfolgen.

Die erfindungsgemäße Folie wird aus einer Mischung eines thermoplastischen Polyesters mit den sphärischen, bevorzugt monodispersen Partikeln (I) und den anorganischen beziehungsweise organischen Partikeln (II) hergestellt.

Der Polyesterrohstoff kann durch Zugabe der Partikel vor Beginn der Umesterung oder auch nach Beendigung der Umesterung hergestellt werden. Bevorzugt ist die Zugabe der Partikel in Form einer glykolischen Suspension vor Beendigung der Umesterung. Alternativ können die Partikel auch nach der Rohstoffherstellung durch Blenden, Compoundieren etc. eingearbeitet werden.

Die Polyesterfolien können nach bekannten Verfahren, die nicht näher beschrieben werden müssen, aus obenbeschriebenen Rohstoffen oder in Kombination obiger Polyesterrohstoffe mit weiteren Rohstoffen oder üblichen Additiven in üblichen Mengen von 0,1 bis maximal 10 Gew.-% sowohl als Monofolien als auch als mehrschichtige, gegebenenfalls coextrudierte Folien mit gleichen oder unterschiedlich ausgebildeten Oberflächen hergestellt werden, wobei eine Oberfläche beispielsweise pigmentiert ist und die andere Oberfläche kein Pigment enthält.

Insbesondere bei einem mehrstufigen Streckprozeß mit hohen Verstreckgraden in einer bevorzugten oder in beiden Flächenrichtungen der Folie, z.B. bei der Herstellung von Folien mit sehr hohen mechanischen Eigenschaften, kommen die Vorzüge der erfindungsgemäß eingebauten Partikel besonders zum Tragen. Hierbei sind auch Streckprozesse mit der Folge längs-quer-längs, simultan (längs-quer) und eine Mehrfachstreckung in einer oder beiden Richtungen möglich.

In den folgenden Beispielen wurden die Partikel (I) und (II) nach Beendigung der Umesterung zugegeben und anschließend die Polykondensation nach der für PET üblichen Weise durchgeführt, so daß das Polymer einen SV-Wert von 810 aufweist.

## Beispiel A (Vergleichsbeispiel)

Es wurden 4000 ppm eines "kleinen", nicht-monodispersen, anorganischen $SiO_2$ Partikels (Hersteller: Degussa, Hanau) mit einem mittleren Teilchendurchmesser von 0,3 bis 0,4 µm (Aspect Ratio, gemessen in der Folie > 1,2) und 3000 ppm eines "mittleren" Partikels ($CaCO_3$) (Hersteller: Omya, Köln) mit einem mittleren Teilchendurchmesser von 1,1 µm in Polyethylenterephthalat (PET) eingearbeitet.

## Beispiel B

Es wurden 3000 ppm eines "kleinen", sphärischen (Aspect Ratio = 1), monodispersen $SiO_2$ Partikels (Hersteller: Merck, Darmstadt) mit einem Teilchendurchmesser von 0,4 µm und 3000 ppm eines "mittleren" Partikels ($CaCO_3$) mit einem mittleren Teilchendurchmesser von 0,99 µm (Aspect Ratio > 1,2) in Polyethylenterephthalat (PET) eingearbeitet.

Die erhaltenen PET-Chips wurden bei 160 °C auf eine Restfeuchte von 50 ppm getrocknet und bei 280 bis 310 °C extrudiert. Das geschmolzene Polymer wurde aus einer Düse (Düsenspalt 1 mm) über eine Abzugswalze abgezogen.

Der nichtverstreckte Film wurde um den Faktor 3,8 in Maschinenrichtung bei 85 bis 135 °C gestreckt. In einem Rahmen erfolgte bei 85 bis 145 °C eine Querstreckung um den Faktor 4,2. Anschließend wurde die Folie bei 180 bis 230 °C in einem weiteren Rahmen fixiert.

Die Eigenschaften derart hergestellter Folien sind in den folgenden Tabellen 4a und 4b dargestellt.

Tabelle 4a

| Beispiel | Foliendicke | Gasströmzeit | Rauhigkeit | | Wicklung |
|---|---|---|---|---|---|
| | | | $R_a$ | $R_z$ | |
| | (µm) | (sec) | (nm) | (nm) | |
| A | 2,0 | 1200 ± 200 | 26 ± 5 | 262 ± 73 | (-) |
| B | 2,0 | 716 ± 150 | 28 ± 5 | 268 ± 78 | (+) |

Tabelle 4b

| Beispiel | Gesamtpeakzahl | Oberflächenerhebungen bestimmter Peakhöhen | | |
|---|---|---|---|---|
| | $0{,}36\ mm^2$ | $0{,}05\text{-}0{,}3\ \mu m/0{,}36\ mm^2$ | $0{,}3\text{-}0{,}6\ \mu m/0{,}36\ mm^2$ | $0{,}6\text{-}1\ \mu m/0{,}36\ mm^2$ |
| A | $8926 \pm 2000$ | $8615 \pm 1970$ | $266 \pm 70$ | $45 \pm 20$ |
| B | $9632 \pm 2000$ | $8256 \pm 1970$ | $1300 \pm 70$ | $76 \pm 20$ |

In beiden Beispielen wurden zwar ausschließlich "kleine" und "mittlere" Partikel in den Rohstoffen eingearbeitet, man erkennt jedoch, daß allein durch den Einsatz eines kleinen Partikels mit Verteilung und einem Aspect Ratio von > 1,2 ein faltenfreies Wickeln der mit diesem Rohstoff hergestellten Folie nicht möglich ist.

Die $R_a$-Werte beider Folien liegen unter 30 nm. Bezüglich der Oberflächenerhebungen liegen die Peakzahlen für die Peakhöhenklasse von 0,6 bis 1,0 $\mu$m für beide Folien unter 100. Jedoch konnte die Folie in Beispiel A im Gegensatz zu Beispiel B nicht ohne Verdehnungen beziehungsweise Falten gewickelt werden. Dies drückt sich auch in den entsprechenden Oberflächenströmungswiderständen aus, der für die Folie in Beispiel B deutlich niedriger als für Beispiel A ist.

Zwar erfüllt die Folie in Beispiel A die aufgestellte Gleichung t≤a•d$^b$, die aus den Folien gemäß Tabelle 1 abgeleitet wurde, allerdings lag die Rauhigkeit der Folie A bei 26 nm. Das heißt, daß glattere Folien auf jeden Fall kürzere Gasströmungszeiten aufweisen müssen, um ohne Probleme verarbeitet werden zu können. Die entsprechenden besseren Eigenschaften sind am Beispiel der Folie B aufgezeigt.

**Patentansprüche**

1.   Orientierte ein- oder mehrschichtige Folie mit einer Gesamtdicke von ≤ 4 $\mu$m und einer Rauhigkeit auf mindestens einer Folienoberfläche von $R_a$ < 30 nm, **dadurch gekennzeichnet, daß** der Oberflächengasströmungswiderstand auf mindestens einer Folienoberfläche

$$t \leq a^{.}d^{b}\ [sec]$$

ist, mit a = 0 bis 10.000 [sec/$\mu$m], b = -3,0 bis 0 und d = Gesamtfoliendicke ≤ 4 $\mu$m und daß mindestens eine Oberfläche der Folie weniger als 100 Oberflächenerhöhungen pro 0,36 mm$^2$ mit einer Peakhöhe von > 0,6 $\mu$m aufweist.

2.   Orientierte Folie nach Anspruch 1, **dadurch gekennzeichnet, daß** sie Partikel (I) mit einem Aspect Ratio von 1 bis 1,2 enthält.

3.   Orientierte Folie nach Anspruch 2, **dadurch gekennzeichnet, daß** die Partikel eine monodisperse Verteilung aufweisen.

4.   Orientierte Folie nach Anspruch 2 oder 3, **dadurch gekennzeichnet, daß** der Teilchendurchmesser der Partikel (I) 0,05 bis 2,5 $\mu$m beträgt.

5.   Orientierte Folie nach einem oder mehreren der Ansprüche 1 bis 4, **dadurch gekennzeichnet, daß** sie Partikel (II) mit einem Aspect Ratio von > 1,2 enthält.

6.   Orientierte Folie nach einem oder mehreren der Ansprüche 1 bis 5, **dadurch gekennzeichnet, daß** sie Partikel (II) mit einem mittleren Teilchendurchmesser von 0,05 bis 2,5 $\mu$m enthält.

7.   Orientierte Folie nach Anspruch 5 oder 6, **dadurch gekennzeichnet, daß** der mittlere Teilchendurchmesser der Partikel (II) größer ist, als der Teilchendurchmesser der Partikel (I).

8.   Orientierte Folie nach einem oder mehreren der Ansprüche 1 bis 7, **dadurch gekennzeichnet, daß** sie biaxial orientiert ist.

9.   Orientierte Folie nach einem oder mehreren der Ansprüche 1 bis 8, **dadurch gekennzeichnet, daß** sie einschichtig ist.

**10.** Orientierte Folie nach einem oder mehreren der Ansprüche 1 bis 9, **dadurch gekennzeichnet, daß** beide Oberflächen die gleiche Topographie aufweisen.

**11.** Folienrohstoff bestehend aus einem oder mehreren thermoplastischen Polymeren und partikulärem Material, **dadurch gekennzeichnet, daß** das partikuläre Material aus Partikeln (I) mit einem Aspect Ratio von 1 bis 1,2 und Partikeln (II) mit einem Aspect Ratio von > 1,2 und einem Teilchendurchmesser von 0,5 bis 2,5 μm besteht.

**12.** Folienrohstoff nach Anspruch 11, **dadurch gekennzeichnet, daß** die Partikel (I) eine monodisperse Verteilung aufweisen.

**13.** Folienrohstoff nach Anspruch 11 oder 12, **dadurch gekennzeichnet, daß** der Teilchendurchmesser der Partikel (I) 0,05 bis 2,5 μm beträgt.

**14.** Folienrohstoff nach einem oder mehreren der Ansprüche 11 bis 13, **dadurch gekennzeichnet, daß** die Partikel (I) und (II) in dem Folienrohstoff in einer Menge von 0,005 bis 5 Gew.-% (bezogen auf das Gewicht des Folienrohstoffs) enthalten sind.

**15.** Folienrohstoff nach einem oder mehreren der Ansprüche 11 bis 14, **dadurch gekennzeichnet, daß** es sich bei den Partikeln (I) um Siliziumdioxidpartikel und/oder Silikonpartikel und/oder Kalziumcarbonatpartikel und/oder vernetzte Polystyrolpartikel und/oder vernetzte Epoxidharzpartikel und/oder vernetzte Acrylatpartikel handelt.

**16.** Folienrohstoff nach einem oder mehreren der Ansprüche 11 bis 15, **dadurch gekennzeichnet, daß** es sich bei den Partikeln (II) um Kaolinpartikel und/oder Aluminiumoxidpartikel und/oder Siliziumdioxidpartikel und/oder Partikel aus amorpher und/oder pyrogener Kieselsäure und/oder Partikel aus natürlichem oder gefälltem Kalziumcarbonat und/oder organische Partikel handelt.

**17.** Folienrohstoff nach einem oder mehreren der Ansprüche 11 bis 16, **dadurch gekennzeichnet, daß** das thermoplastische Polymer ausgewählt wird aus Polyestern der Gruppe PET, PEN, PCT, PENBB und Blends dieser Polyester.

**18.** Verwendung einer Folie nach einem oder mehreren der Ansprüche 1 bis 10 als Kondensatorfolie.

**Claims**

**1.** An oriented single- or multilayer film having a total thickness of ≤ 4 μm and a roughness on at least one film surface of $R_a$ < 30 nm, wherein the surface gas-flow resistance on at least one film surface is

$$t \leq a \cdot d^b \text{ [sec]},$$

where a = 0 to 10,000 [sec/μm], b = -3.0 to 0 and d (overall film thickness) ≤ 4 μm, and wherein at least one surface of the film contains fewer than 100 surface elevations with a peak height of > 0.6 μm per 0.36 mm$^2$.

**2.** An oriented film as claimed in claim 1, which contains particles (I) having an aspect ratio of from 1 to 1.2.

**3.** An oriented film as claimed in claim 2, wherein the particles have a monodisperse distribution.

**4.** An oriented film as claimed in claim 2 or 3, wherein the particle diameter of the particles (I) is from 0.05 to 2.5 μm.

**5.** An oriented film as claimed in one or more of claims 1 to 4, which contains particles (II) having an aspect ratio of > 1.2.

**6.** An oriented film as claimed in one or more of claims 1 to 5, which contains particles (II) having a mean particle diameter of from 0.05 to 2.5 μm.

7. An oriented film as claimed in claim 5 or 6, wherein the mean particle diameter of the particles (II) is greater than the particle diameter of the particles (I).

8. An oriented film as claimed in one or more of claims 1 to 7, which has been biaxially oriented.

9. An oriented film as claimed in one or more of claims 1 to 8, which has a single layer.

10. An oriented film as claimed in one or more of claims 1 to 9, wherein both surfaces have the same topography.

11. A film raw material comprising one or more thermoplastic polymers and particulate material, wherein the particulate material comprises particles (I) having an aspect ratio of from 1 to 1.2 and particles (II) having an aspect ratio of > 1.2 and a particle diameter of from 0.5 to 2.5 $\mu$m.

12. A film raw material as claimed in claim 11, wherein the particles (I) have a monodisperse distribution.

13. A film raw material as claimed in claim 11 or 12, wherein the particle diameter of the particles (I) is from 0.05 to 2.5 $\mu$m.

14. A film raw material as claimed in one or more of claims 11 to 13, wherein the particles (I) and (II) are present in the film raw material in an amount of from 0.005 to 5 % by weight (based on the weight of the film raw material).

15. A film raw material as claimed in one or more of claims 11 to 14, wherein the particles (I) are silicon dioxide particles and/or silicone particles and/or calcium carbonate particles and/or crosslinked polystyrene particles and/or crosslinked epoxy resin particles and/or crosslinked acrylate particles.

16. A film raw material as claimed in one or more of claims 11 to 15, wherein the particles (II) are kaolin particles and/or aluminum oxide particles and/or silicon dioxide particles and/or particles of amorphous and/or pyrogenic silicic acid and/or particles of natural or precipitated calcium carbonate and/or organic particles.

17. A film raw material as claimed in one or more of claims 11 to 16, wherein the thermoplastic polymer is selected from polyesters of the group consisting of PET, PEN, PCT, PENBB and blends of these polyesters.

18. The use of a film as claimed in one or more of claims 1 to 10 as a capacitor film.

**Revendications**

1. Feuille orientée à une ou plusieurs couches d'une épaisseur totale $\leq$ 4 $\mu$m et d'une rugosité sur au moins une surface de la feuille de $R_a$ < 30 nm, **caractérisée en ce que** la résistance à l'écoulement de gaz en surface est au moins sur une surface de la feuille :

$$t \leq a \cdot d^b \ [s]$$

avec a = 0 à 10 000 [s/$\mu$m], b = -3,0 à 0 et d = épaisseur totale de la feuille $\leq$ 4 $\mu$m, et **en ce qu'**au moins une surface de la feuille présente moins de 100 protubérances en surface par 0,36 mm$^2$ avec une hauteur de pic > 0,6 $\mu$m.

2. Feuille orientée selon la revendication 1, **caractérisée en ce qu'**elle contient des particules (I) avec un rapport hauteur/largeur de 1 à 1,2.

3. Feuille orientée selon la revendication 2, **caractérisée en ce que** les particules présentent une distribution monodispersée.

4. Feuille orientée selon la revendication 2 ou 3, **caractérisée en ce que** le diamètre des particules (I) est de 0,05 à 2,5 $\mu$m.

5. Feuille orientée selon une ou plusieurs des revendications 1 à 4, **caractérisée en ce qu'**elle contient des particules (II) avec un rapport hauteur/largeur > 1,2.

6. Feuille orientée selon une ou plusieurs des revendications 1 à 5, **caractérisée en ce qu'**elle contient des particules (II) d'un diamètre moyen de 0,05 à 2,5 μm.

7. Feuille orientée selon la revendication 5 ou 6, **caractérisée en ce que** le diamètre moyen des particules (II) est supérieur au diamètre des particules (I).

8. Feuille orientée selon une ou plusieurs des revendications 1 à 7, **caractérisée en ce qu'**elle est orientée biaxialement.

9. Feuille orientée selon une ou plusieurs des revendications 1 à 8, **caractérisée en ce qu'**elle est monocouche.

10. Feuille orientée selon un ou plusieurs des revendications 1 à 9, **caractérisée en ce que** les deux surfaces présentent la même topographie.

11. Matière première pour feuille constituée d'un ou plusieurs polymères thermoplastiques et d'un matériau particulaire, **caractérisée en ce que** le matériau particulaire est constitué de particules (I) avec un rapport hauteur/largeur de 1 à 1,2 et de particules (II) avec un rapport hauteur/largeur supérieur à 1,2 et un diamètre particulaire de 0,5 à 2,5 μm.

12. Matière première pour feuille selon la revendication 11, **caractérisée en ce que** les particules (I) présentent une distribution monodispersée.

13. Matière première pour feuille selon la revendication 11 ou 12, **caractérisée en ce que** le diamètre de particules (I) est de 0,05 à 2,5 μm.

14. Matière première pour feuille selon une ou plusieurs des revendications 11 à 13, **caractérisée en ce que** les particules (I) et (II) sont contenues dans cette matière première pour feuille en quantité de 0,005 à 5% en poids (par rapport au poids de la matière première pour feuille).

15. Matière première pour feuille selon une ou plusieurs des revendications 11 à 14, **caractérisée en ce que** les particules (I) sont formées de particules de dioxyde de silicium et/ou de particules de silicone et/ou de particules de carbonate de calcium et/ou de particules de polystyrène réticulé et/ou de particules de résine époxyde réticulée et/ou de particules d'acrylate réticulé.

16. Matière première pour feuille selon une ou plusieurs des revendications 11 à 15, **caractérisée en ce que** les particules (II) sont formées de particules de kaolin et/ou de particules d'oxyde d'aluminium et/ou de particules de dioxyde de silicium et/ou de particules constituées d'acide silicique amorphe et/ou pyrogène et/ou de particules de carbonate de calcium naturel ou précipité et/ou de particules organiques.

17. Matière première pour feuille selon une ou plusieurs des revendications 11 à 16, **caractérisée en ce que** le polymère thermoplastique est choisi parmi les polyesters du groupe du PET, du PEN, du PCT, du PENBB et de mélanges de ces polyesters.

18. Utilisation d'une feuille selon une ou plusieurs des revendications 1 à 10 comme feuille de condensateur.